# EUROPEAN PATENT APPLICATION

(11) **EP 3 335 779 A1**
(43) Date of publication of application: **20.06.2018**
(21) Application number: 16204456.4
(22) Date of filing: 15.12.2016
(51) Int. Cl.: B01D 39/16

(54) **FILTER MEDIUM AND METHOD OF MAKING IT**

(71) Applicant: Mann+Hummel GmbH, 71638 Ludwigsburg (DE)
(72) Inventor: POLJAK, Ivanka, 43640 Askim (SE); CARLSSON, Thomas, 50753 Borås (SE)
(74) Representative: Seyboth, Matthias

(57) **Abstract**

A filter medium comprising at least two layers of fiber nonwoven, wherein each of the two layers is separately plasma-treated ;
a method for producing a filter medium and a production line.

## Description

The present invention relates to a filter medium, especially for filtering air, to a method for producing said medium and to a production line for producing said medium.

Plasma treatments and especially Corona treatments are well known technologies. The documents EP 2 974 778 A1, DE 10 2008 035 934 A1 and EP 1 732 664 A1 disclose the use of said technologies in the production of filter materials. It is commonly used to produce superficially charged nonwoven material. These electrical charges enhance the filtration efficiency of the filter medium in terms of electrostatic particle separation.

According to the aforementioned documents a known filter medium can comprise one or more layers. According to the state of the art, a production of a plasma treated filter medium consist of the steps
a) providing a single or multilayered filter medium
b) plasma-treatment of the filter medium

This plasma treatment can be regarded as a surface treatment. The charged fibers that are produced by the plasma treatment however are rather positioned on the surface of the media structurethan in the middle segment of the filter medium. A deep-charged filter medium cannot be provided by this production method.

A technique for providing a deep-charged filter medium is by creating tribocharge. This can be used instead of a plasma treatment for the single or multilayered filter medium.

The tribocharge technique however is sensitive in regards to production and longterm conservation of the electrical charge. Furthermore specific fibers are required, such as acrylic fibers, which are costly. Therefore the tribochage technique is limited to the specific fiber material, requires special production settings and usually is cost intensive. Besides that tribocharged filter media usually has a rather moderate capacity to capture dust while having a low pressure drop increase. Therefore it is combined with other layers to fulfill both, high particle separation and high dust capacity. Thus the overall media becomes usually very expensive by laminating a second layer to it.

It is the object of the invention to provide an alternative, more cost-effective way for the production of a filter media fulfilling both, deep-charged characteristics and high dust capacity from one production step.

This object is achieved by a filter medium according to claim 1, by a method according to claim 10 and by a production line according to claim 14.

A filter medium according to the invention comprises at least two layers of nonwoven fiber material, wherein each of the two layers is separately plasma-treated.

In a preferred embodiment of the invention the nonwoven filter material could be carded nonwoven filter material.

Because each of the two layers is treated with plasma, especially by corona treatment, each of the two layers has separately charged fibers. Due to the separate treatment of the layers the filter medium comprises fibers that are positioned deeper in the structure of the multi-layered filter medium than charged fibers that are produced by a surface treatment of the whole multi-layered composition with plasma.

The existence of charged fibers that are positioned deeper in the filter medium results in a better filter performance of the filter medium, especially when tested according to ISO16890 or EN779 2012.

Advantageous embodiments are subject-matter of the dependent claims.

For a higher mechanical stability and a better filter performance the multilayered filter medium can comprise at least four, preferably at least six, layers of fiber material, especially carded fiber material, wherein each layer is separately plasma-treated.

The fiber material of the at least two layers, preferably of all layers, can comprise at least 20 Vol.% polypropylene fibers and polyester fibers, preferably 50 Vol.% most preferably 80 Vol.% or more polypropylene fibers. If bicomponent fibers are used, they should comprise at least 20 Vol.% polypropylene, preferably 50 Vol.% most preferably 80 Vol.% or more polypropylene. Polypropylene fibers or fibers containing polypropylene have good charging properties for the use in filter materials. Polyester fibers positively contribute to the dust capacity characteristics of this kind of filter media. A significant tribo charge with this fiber combination is unlikely. The carded fiber material of all layers of the multilayered filter medium can consist of polypropylene fibers or a blend of polypropylene and polyester fibers, such as PET (polyethylene terephthalate) and/or PES (polyethersulfone).

In a preferred embodiment of the invention the filter material of the filter medium could be a carded fiber material.

The carded fiber material of the at least two layers, preferably of all layers, can comprise less than 50 Vol.% acrylic polymer fibers or modifications of acrylic polymer fibers, preferably less than 20 Vol.%, most preferably less than 5 Vol.% acrylic polymer fibers or modifications of acrylic polymer fibers. A deep-charged filter medium with an amount of less than 50 Vol.% especially less than 20 Vol.% is so far not known in the art, provided that no additional layer is laminated to the deep charged filter media

The fibers used are most preferably in the range of 0,8 to 12 dtex. These fibers shown a good compromise between charging and other filter properties such as dust capacity and air flow resistance.

For an effective production of said filter material, the layers of the multilayered filter medium can consist of essentially the same material.

The electrical potential used for generating a plasma is most preferably between -60 and +60 kV preferably using a set up of for example a high voltage generator, a corona electrode and a grounded plate or roller, for example in a carding machine. It can also be a higher electrical potential, depending on the plasma used. The surface weight of a single carded fiber web is most preferably in the range of 5 to 100 g/m². From the carded fiber web a batt is created by condensing in or cross-lapping perpendicular to the machine direction.

Therefore one aspect of the invention is the production of either an inventive multilayered filter medium for example by a cross lapper or a single layered deep charged filter medium by condensing the carded fiber web to said batt.

Cross layed or cross lapped can be understood to be essentially the same in the context of the current invention.

With this process step the width, thickness and the orientation of the fibers can be controlled. Furthermore in this case is taken advantage of the layering of condensing by increasing the electrical charge density per surface weight on the finished product. Thus the deep charge of the finished filter media is created. After this process step the batt, which can also be already regarded as a multilayered filter medium, can be bonded for further mechanical stability. This is most preferably done by needling in a needle loom, but also other techniques, such as thermal bonding and ultrasonic bonding can be considered.

The method for producing a filter medium, especially a filter medium according to claim 1, according to the invention comprises at least the following method-steps:
A) Producing a fiber nonwoven for a filter medium either from staple fibers through carding or from spunbonding.
B) Plasma-treatment of the fiber nonwoven or of the fibers during the production of the fiber nonwoven by generating charged fibers;

The plasma-treatment can be a corona-treatment. The treatment can be performed during the production of said nonwoven, especially before, within or after the carding machine, or after the nonwoven has been fully produced, but before it is stacked layerwise to provide a filter medium or before it is condensed to provide a filter medium. In other words, the treatment may be performed before or after a first nonwoven layer is created from fibers. However, according to the invention, the treatment should be performed on one or a plurality of base nonwoven layers before creating a multi-layered structure, for example by cross-lapping, as described further below.
C) Positioning of the fiber nonwoven by forming a filter medium. This positioning can be done layerwise in at least two overlapping, folded or stacked layers or can be done by condensing the filter nonwoven and probably by an additional optional needling process.
   Preferably by a cross-lapping process, where a batt is formed by depositing the web in a zick-zack pattern. Also a condensing of the carded web can be considered, where the web is condensed in machine direction and therefore can be considered as layering in vertical direction of the media thickness.

The formation of the filter medium can comprise further steps such as a compacting step, preferably by introducing weld joints or needle joints.
In a preferred embodiment the overlapping layers can be connected to each other by joints, preferably needle joints, melt joints, adhesive joints and/or weld joints, especially in Step C after the layerwise positioning of the fiber nonwoven. This enhances the mechanical stability of the filter medium.

The layerwise positioning of the fiber nonwoven can preferably be done in a zick-zack pattern preferably by a cross lapper. In general, it is preferable to create a the multi-layered structure out of one single base layer. The above mentioned processes advantageously can create a multi-layered structure without the need of different base layers and/or without the need to cut the base layer or use two similar base layers to create the multi-layered structure. Still, when using separate base layers to create a multi-layered structure, it can be advantageous according to this invention to use at least two similar or preferably identical base layers to create the multi-layered media structure to create a homogenous filter media.

An inventive production line for producing a filter medium, especially a multilayered filter medium according to claim 1, comprises at least a plasma generator and a cross lapper or a condenser, wherein fiber material is transported from the carding machine to the cross lapper in a transport direction.

The plasma generator for charging fiber material can be preferably positioned either in a carding machine or in transport direction after a carding machine.

The plasma generator can be positioned before the cross lapper or within or just after the cross lapper but before the formation filter medium, especially before the formation of a multi-layered structure. The position of the plasma generator after the cross lapper but before the formation of the filter medium can comprise a plasma-treatment before the overlapping arrangement of the layers.

Alternatively the plasma generator can be positioned before the condenser. Alternatively the plasma generator can be positioned in the condenser but before the formation of the filter medium

This production line can produce a filter medium with staple fibers wherein the fibers of each layer or selected layers of the filter medium can be charged by a plasma-treatment.

Alternatively or optional to staple fibers there can be also used spundbond fibers without the carding process but with an optional cross lapper or condenser.

The plasma generator can be designated to produce corona plasma.

One embodiment of the invention is explained in detail in the following figures. The invention is not limited to the figures and can be realized in various other ways.
- Fig. 1: shows a schematic presentation of a first variation of an inventive production line for the production of an inventive medium;
- Fig. 2: shows a measurement result (particle penetration of emery oil with d₅₀ = 0,33 µm in % for different types of medium) for a filter performance of different filter media;
- Fig. 3: shows a measurement result (particle penetration of emery oil with d₅₀ = 0,33 µm in % over the pressure drop in Pascal) for a surface charged filter medium (301) and a deep charged filter medium (302) and
- Fig. 4: shows a schematic presentation of a second variation of an inventive production line for the production of an inventive medium.

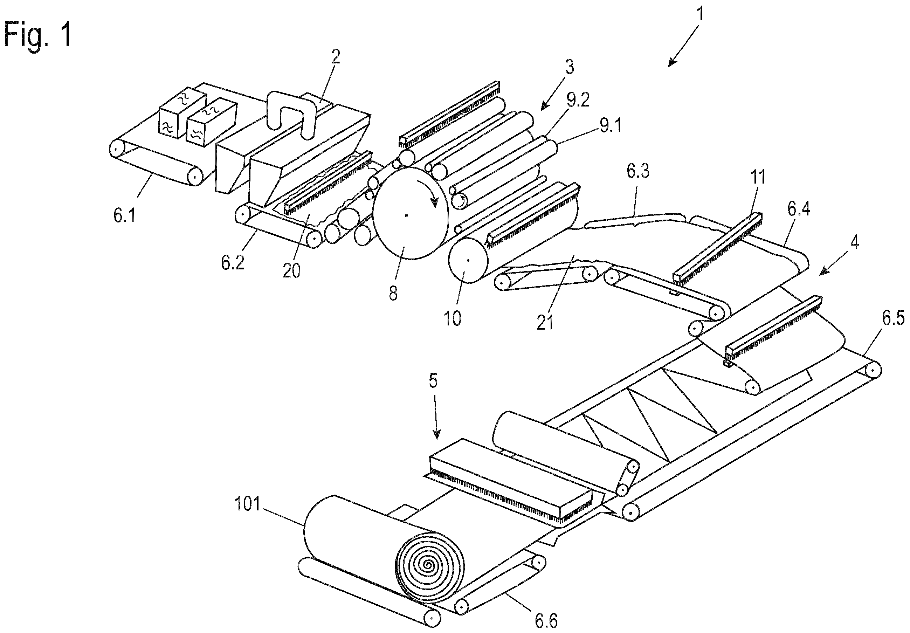

Fig. 1 discloses a nonwoven production line 1 for a filter medium 101 according to this invention.

Fig. 1 show basically one production line but with different possible positions for charging of the filter medium or for charging of the layers of the filter medium by a charging unit 11. The charging units 11 can all be used together as shown in Fig. 1 in one production line. Also, only a sub-set of the charging units 11 shown can be used. However the number of charging units 11 can also be reduced to one.

The different positions of the charging units 11 in Fig. 1 are therefore each preferred positions for charging the filter medium during the production.

The nonwoven production line 1 according to the invention can comprise a bale opener 2, a carding unit 3, a cross lapper 4 and a needle loom 5.

The fiber material in the different stage of production can be transported from the different units of the nonwoven production line with conveying belts 6.

A bale opener or blender is often used in conventional production processes for the production of a nonwoven filter medium. A typical bale opener which can be used in the current invention is for example disclosed in the Fig. 7 and 8 in US2006010655 AA. The bale opener breaks the fiber bale open.

The fiber material can be transported from a bale opener 2 to a carding machine 3 by a conveying belt 6.2. A picker, a blender, a unit for moistening or oiling the fibers for example with anti-electrostatic material or other units for the treatment of fibers can be positioned between the bale opener and the carding machine.

In the carding machine the fibers are separated and assembled into a fiber nonwoven. This fiber nonwoven is in general very thin and is sensitive to rupture.

The carding machine can comprise units for willowing the fiber material to receive loose fibers. The carding machine can also comprise a lapping unit for removing particles, such as dust. The said units can also be positioned between the bale opener 2 and the carding machine 3.

In Fig. 1, the fiber material supplied by the conveyor belt 6.1 can comprise a high amount of purified staple fibers. The carding machine 3 can comprise a plurality of spiked drums with different functions.

The fibers 20 are supplied to the carding machine with a nipper 7. The nipper is provided to prepare the fibers with a pre-rip treatment before it will be conveyed to the swift drum 8. The nipper 7 can also comprise two antagonal rotating spiked drums.

Next to the swift drum are positioned a plurality of drums, the worker drums 9.1 and stripper drums 9.2. The carding machine, especially the different carding drums, arrange the fibers of the fiber material 20 and provide a fiber nonwoven 21 of carded fibers. A doffer 10 can position the fiber nonwoven 21 on the conveying belt 6.4.

The conveying belt 6.4 can be part of a cross lapper 4. The cross lapper will position the fiber nonwoven 21 of a support, such as a collection table. The cross lapper 4 or units of the cross lapper such as the conveying belt 6.4, can be moved relative to the support, for example in a linear direction.

The carding machine 3 and other units of the nonwoven production line 1 can alternatively moved together with moving units of the cross lapper 4.

By the cross lapper 4, the fiber nonwoven 21 is positioned layer by layer on the top of itself. A unit of nonwoven fiber layers, which comprises at least two fiber layers, which are mainly positioned one above the other, can already be a filter medium according to the invention.

The cross lapper 4 can take the carded fiber nonwoven and can lay it in a zig zag pattern.

Therefore the final filter medium will comprise multiple filter layers which are cross layed over each-other.

Normally it is advantageous that a filter medium will comprise at least four or more layers, due to mechanical stability.

After a certain amount of overlapping layers laid over one another.

After the carding and positioning of the fiber nonwoven layers, the filter medium can be treated by a compacting unit 5 and can be needled, heated and/or impregnated with a binder. A suitably compacting unit 5, could be a needle loom for example.

According to the invention the production line is provided with one or more plasma generator/s 11, preferably a corona generator, for the plasma-treatment of the fiber nonwoven before it is arranged layerwise as a multilayered unit.

Preferred a corona treatment can be used for the surface modification of a fiber nonwoven. The technique of a corona treatment is already known in the field of polymer materials. It uses a low temperature corona discharge plasma to impart changes in the properties of a filter medium. The corona plasma is generated by the application of high voltage to an electrode that has a sharp tip. The plasma forms at the tip.

A linear array of electrodes, preferably needle electrodes, can be used often to create a curtain of corona plasma. The array can be as wide as 90%-100% of the width of the conveying belt 6.4. By passing the corona plasma the surface energy of the fibers of the nonwoven web will change. There can be also a series arrangement of arrays to increase the surface energy of the nonwoven web even more.

This change will reduce the particle penetration of the filter medium. Due to the fact that the plasma-treatment is performed prior to the formation of the multilayer filter medium, the filter medium has a much higher filtration performance than a filter medium with only a plasma treatment on the top surface or top layer of the filter medium.

The inventive filter medium therefore has also plasma-modified fibers in the depth of the filter medium.

A deep electrical filtration with fibers having a charged surface can also be provided with a triboelectric charging process. This process however is limited to a specific type of fibers, mostly acrylic fibers or a fiber blend with at least 50 Vol.% of acrylic fibers. Therefore the triboelectric charging process has high limitation for fiber materials and properties in the production of a filter medium.

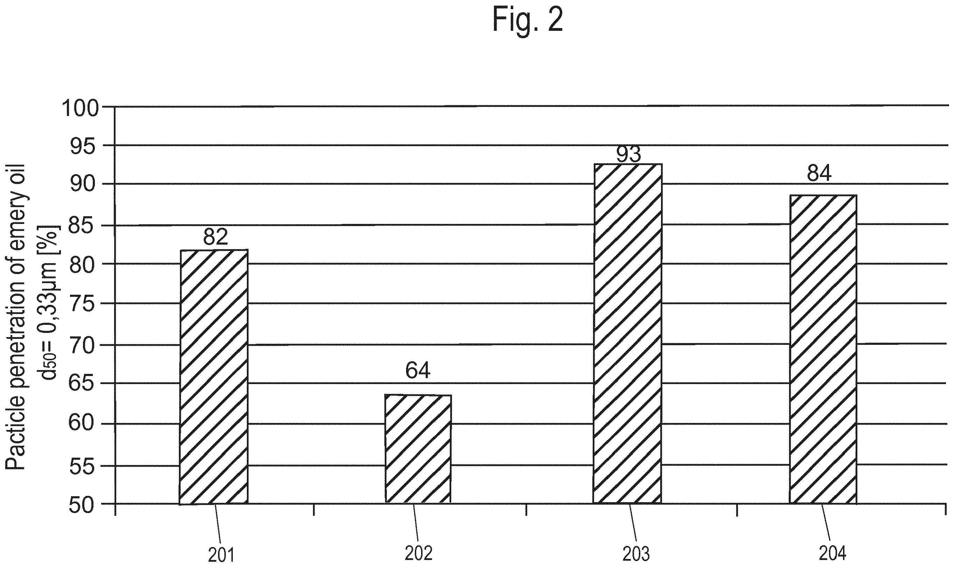

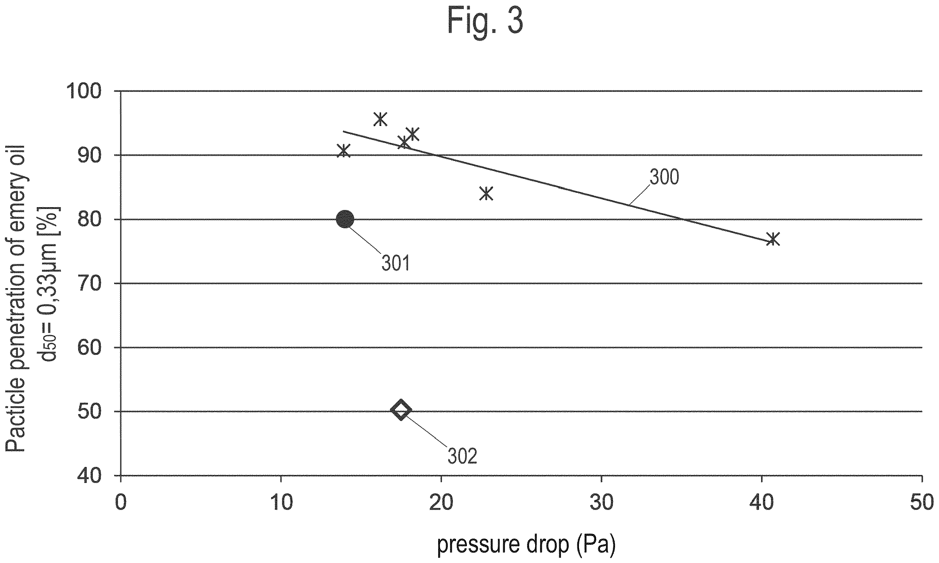

The filter performance of a filter medium having two or more layers, which are plasma-treated, especially corona-treated is shown in Fig. 2 and Fig. 3.

Plasma-treated, especially corona-treated layers, means that each layer has a constant positive and negative charged surface.

(Due to the zig-zag-arrangement performed by the cross lapper 4, the surfaces with either two positive or two negative charges of two layers are positioned next to another. Therefore the risk of a discharge is reduced.)

Referring to Fig. 2 one can see the particle penetration in [%] for a first multilayered filter medium 201 with only a first nonwoven layer, which is corona treated.

Referring to Fig. 2 one can see the particle penetration in [%] for a second multilayered filter medium 202 having the same structure as the first multilayered filter medium, but with a first and a second nonwoven layer which are corona treated - whereas the second nonwoven layer in the first multilayered filter medium was not corona treated.

Referring to Fig. 2 one can see the particle penetration in [%] for a third multilayered filter medium 203 having the same structure as the first multilayered filter medium 201 but after the discharge of the first corona-treated layer with Isopropanol (IPA). The IPA discharge was done according EN779 2012.

Referring to Fig. 2 one can see the particle penetration in [%] for a fourth multilayered filter medium 204 having the same structure as the second multilayered filter medium 201 but after the discharge of the first and the second corona-treated layer.

For the corona-treatment 15 kV was applied. The evaluation of particle penetration was done with emery oil particles in the size range of 0,33 µm using a flow velocity of 15 cm/s. This test is referring to the measuring method in EN779 2012.

As one can see the particle penetration is very high for the second filter medium. Compared to the filter performance of the multilayered filer media that are described in the state of the art having a surface corona treatment of the top layer after the formation of the filter medium - the current filter medium according to the invention has a significantly lower rate for the particle penetration.

The inventive filter medium can especially be used as an air filter medium for example in HVAC (heating ventilation air conditioning) or industrial applications.

In a preferred variation of invention the multilayered filter medium does consist of only plasma-treated, preferably corona-treated, nonwoven fiber layers with carded fibers.

In another preferred variation of the invention the plasma-generator 11, preferably the corona generator, can be positioned over a carding drum, preferably the swift drum 8. The carding drum can be grounded the electrode of the plasma generator, preferably the corona generator, can be positioned over the surface of said drum. In this arrangement this corona generator 11 could be understood as a part of the carding machine 4.

Referring to Fig. 3 one can see a graph 300 for the correlation of the particle penetration in % over the pressure drop in Pascal for a normal multilayered filtration medium without any plasma treatment. This penetration represents the mechanical separation efficiency and refers to a filtration mechanism such as separation by inertia, interception and diffusion, electrostatic effects generally do not occur. Whereas the penetration in % is 100 - efficiency.

Further to that the particle penetration was measured for a surface charged multilayered filtration medium such as the first filter medium 201. The results are represented by data point 301.

The penetration, comprising mechanical and electrostatic effects, was measured for a charged multilayered filtration medium. The medium comprised 10 single layers, each charged by applying -8 to -20 kV to the corona plasma. The results are represented by data point 302.

The multilayered filter medium according to a preferred embodiment of the invention can comprise at least 20 Vol.% polypropylene fibers and polyester fibers, preferably 50 Vol.% most preferably 80 Vol.% polypropylene fibers and polyester fibers.

In a preferred embodiment the multilayered filter medium can consist of only polypropylene or a fraction of polyester fibers up to 50%.

In a preferred embodiment each layer of said multilayered filter medium can basically consist of the same fiber material.

The amount of acrylic polymer fibers in the multilayered filter medium can in a preferred embodiment be less than 50 Vol.%, preferably less than 20 Vol.%, most preferably less than 5 Vol.%.

A preferred Thickness of a single layer of the inventive filter medium can in the range of 0,5 to 5 millimeters.

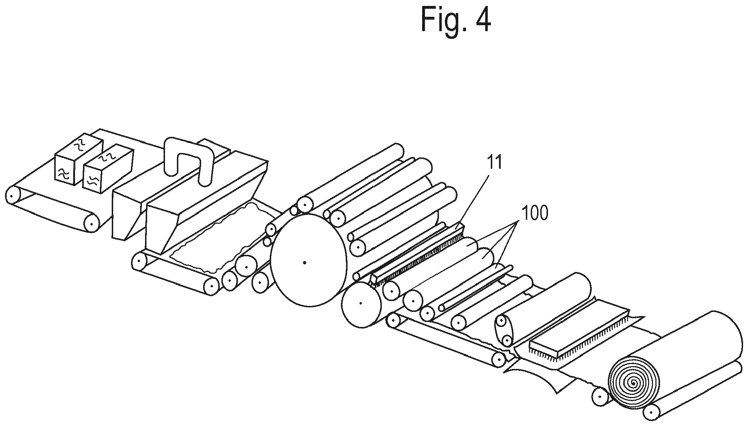

The production line of Fig. 4 uses a condenser 100 instead of a cross lapper. In this production line the filter medium is not compacted layerwise. The condenser 100 can produce a single layer filter material. The charging of the fibers of the filter medium by plasma-treatment with the charging unit 11 however is done before the fiber materials enters the condenser.

The plasma-treated fibers can be placed in the middle of the fiber material by the condenser 100 and therefore a deep-charged filter medium can be produced having an enhanced filter property compared with a surface charged filter medium.

By a modification of the production lines especially the production line on Fig. 4, one can also produce a deep charged filter medium with spunlayed or spunbonded fiber material.

## Claims

1. Filter medium (101, 202, 302) comprising at least two layers of especially carded nonwoven fiber material, wherein each of the two layers is separately electrically charged by plasma-treating.

2. Filter medium according to claim 1, **characterized in that** the filter medium (101, 202, 302) comprises at least four, preferably at least six, layers of fiber material, especially carded fiber material, wherein each layer is separately plasma-treated.

3. Filter medium according to claim 1 or 2, **characterized in that** the fiber material of the at least two layers, preferably of all layers, comprises at least 20 Vol.% most preferably 50 Vol.% polypropylene fibers.

4. Filter medium according to one of the preceding claims, **characterized in that** the carded fiber material of the at least two layers, preferably of all layers, comprises less than 50 Vol.% acrylic polymer fibers, preferably less than 20 Vol.%, most preferably less than 5 Vol.% acrylic polymer fibers.

5. Filter medium according to claim 1 or 2, **characterized in that** the carded fiber material of all layers of the multilayered filter medium (101, 202, 302) consists of polypropylene fibers or polypropylene fibers and polyester fibers.

6. Filter medium according to one of the preceding claims, **characterized in that** the layers of the multilayered filter medium (101, 202, 302) consist of essentially the same material.

7. Filter medium according to one of the preceding claims, wherein the layers are positioned cross-layed over each other.

8. Filter medium according to one of the preceding claims, wherein the layers are connected to each other by joints, especially by needled joints.

9. Method for producing a filter medium (101, 202, 302), especially a filter medium (101, 202, 302) according to claim 1, wherein the method comprises at least the following method-steps:
A) Producing a fiber nonwoven (21) for a filter medium (101, 202, 302) comprising fibers
B) Plasma-treatment of the fiber nonwoven (21) or of the fibers during the production of the fiber nonwoven (21) by generating charged fibers;
C) Positioning of the fiber nonwoven (21) to form a filter medium (101, 202, 302).

10. Method according to claim 9, **characterized in that** in Step C after the positioning of the fiber nonwoven (21), the fiber nonwoven (21) or overlapping layers are connected to each other by joints, preferably needle joints, melt joints, adhesive joints and/or weld joints.

11. Method according to claim 9 or 10, **characterized in that** a layerwise positioning of the fiber nonwoven (21) is done in a zig-zag pattern preferably by a cross lapper.

12. Method according to claim 10 or 11, **characterized in that** the electrical potential used for of the plasma treatment is between -60 kV and +60 kV.

13. Multilayered filter medium according to one of the preceding claims, using a carding process to create the single nonwoven web.

14. Production line (1) for producing a filter medium (101, 202, 302), especially a multilayered filter medium (101, 202, 302) according to claim 1, wherein the production line (1) comprises at least a plasma generator (11) and a cross lapper (4) or a condenser (100), wherein fiber material is transported to the cross lapper (4) or condenser (100) in a transport direction, **characterized in that** the plasma generator (11) for charging fiber material is positioned before, within or after the cross lapper (4) but before the formation filter medium (101, 202, 302) or before or in the condenser (100) but before the formation of the filter medium (101, 202, 302).

15. Production line according to claim 14, wherein the plasma generator is designated to produce corona plasma.
